# EUROPEAN PATENT APPLICATION

(11) **EP 4 759 509 A1**
(43) Date of publication of application: **17.06.2026**
(21) Application number: 25210484.9
(22) Date of filing: 22.10.2025
(51) Int. Cl.: B29C 45/82, B29C 45/00

(54) **A METHOD FOR CONTROLLING A HYDRAULIC OIL PRESSURE PUMP FOR GENERATING A HYDRAULIC PRESSURE IN A MOVEMENT CYLINDER OR AN INJECTION CYLINDER OF AN INJECTION MOULDING STATION**

(30) Priority: 16.12.2024 EP 24220127
(71) Applicant: Tetra Laval Holdings & Finance S.A., 1009 Pully (CH)
(72) Inventor: Tranström, Henrik, 221 86 Lund (SE)
(74) Representative: Tetra Pak Patent Attorneys

(57) **Abstract**

A method (400) for controlling a hydraulic oil pressure pump (212) for generating a hydraulic pressure in a movement cylinder or an injection cylinder of an injection moulding station (102) of a packaging machine (100) is illustrated. The method comprises obtaining (402) shape data (206) pertaining to a shape of a package (104) produced by the packaging machine (100), determining (404) a setpoint oil pressure value based on the shape data (206), obtaining (406) an actual oil pressure value (218) by using a pressure sensor (312), determining (408) control data (210) pertaining to a speed of the hydraulic oil pressure pump (212) based on the set point oil pressure value and the actual oil pressure value (218), and transmitting (410) the control data to the hydraulic oil pressure pump (212).

## Description

### Technical Field

The invention generally relates to packaging technology. More particularly, it is related to a method for controlling a hydraulic oil pressure pump for generating a hydraulic pressure in a movement cylinder or an injection cylinder of an injection moulding station of a packaging machine, a control circuitry, an arrangement and a packaging machine.

### Background Art

Today it is well-known to use injection moulding technology in packaging machines. By way of example, the technology may be used in a packaging machine for forming a top of a so-called carton bottle, sometimes also referred to as hybrid package or cross-over package. In short, in such machine, a body, sometimes referred to as sleeve, made of a carton-based laminate may be fed into an injection moulding station. In this station, a cap placed on a spout may also be provided. During the injection moulding, the top may be formed such that the spout is connected to the body. Another possibility is to have only the body fed into the injection moulding station and to have the spout as well as the top formed during the injection moulding, and thereafter have the cap provided on the spout downstream the injection moulding station, sometimes referred to as post-applied capping. Still a possibility is to have the spout, the top as well as the body injection moulded, i.e. the whole package injection moulded. It is also possible to have a pre-form injection moulded, and in a later stage have the pre-form made into the package using blow moulding technology.

In an injection moulding station, which can be a separate station in a line of equipment or an integrated part of a packaging machine, it is common to have a movement cylinder for controlling a mould, that is, opening and closing the mould. During injection of plastic material into the mould, this movement cylinder also serves the purpose of providing for that an adequate clamping force is applied, i.e. making sure that the moulds are not pushed apart by the incoming plastic material. In addition to the movement cylinder, an injection cylinder is often used for pushing a screw or plunger such that molten plastic material is injected into a mould cavity. The injection cylinder is controlled such that the injection pressure and speed provide for that the mould cavity is completely and uniformly filled.

Unlike many other injection moulding applications, producing packages using this technology comes with some particular challenges. First, food packaging machines often produce 5000 packages or more per hour, which comes with the effect that only a second or even less is made available for each injection moulding cycle. Due to this time constraint, the requirements linked to operations of the movement cylinder and the injection cylinder are generally higher compared to applications in which there is not the same time constraint. Second, for food packaging applications, the packages serve the purpose of protecting a food product. By way of example, in case the top of a food package is not adequately produced and a thickness of the top does not meet the preset standards, this may result in that the package is not able to shield off sunlight to the extent needed with the result that the food product is spoiled. Third, for food packaging applications, there are specific requirements for hydraulic oils used for controlling the movement cylinder or the injection cylinder. By way of example, in most countries, such hydraulic oils are not allowed to comprise substances that may pose a health issue to consumers. As an effect of not being able to use any type of hydraulic oil, extra attention is required when setting up regulator algorithms for controlling the movement cylinder and the injection cylinder in food packaging machines.

Based on the above, even though the current injection moulding technology of packaging machines of today is used with good results, there is still room for improvement. For instance, by being able to even more closely control the movement cylinder and the injection cylinder, a risk of producing insufficient packages can be even further reduced.

### Summary

It is an object of the invention to at least partly overcome one or more of the above-identified limitations of the prior art. In particular, it is an object to provide a method or arrangement for more precisely control the hydraulic pressure used in the movement or injection cylinder.

Generally, by being able to control the hydraulic pressure more precisely, it is made possible to reduce heating of the hydraulic oil. In case the hydraulic pressure is above a setpoint, this namely comes with the effect that the hydraulic oil is returned back to a hydraulic oil tank via an overpressure valve. During such operation, the hydraulic oil is heated. In addition to requiring cooling of the hydraulic oil, increased heat affects wear parts, such as bearings and seals, which in turn comes with the effect that these parts are worn out relatively fast. By determining a setpoint oil pressure value, used by a hydraulic oil pressure pump, based on the shape data of the package to be produced, it is made possible to more closely control the hydraulic pressure provided to the injection moulding station, which provides not only that the packages produced fulfill set requirements, but also that a total cost of operation of the packaging machine can be held at low levels.

According to a first aspect it is provided a method for controlling a hydraulic oil pressure pump for generating a hydraulic pressure in a movement cylinder or an injection cylinder of an injection moulding station of a packaging machine, said method comprising
obtaining shape data pertaining to a shape of a package produced by the packaging machine,
determining a setpoint oil pressure value based on the shape data,
obtaining an actual oil pressure value by using a pressure sensor,
determining control data pertaining to a speed of the hydraulic oil pressure pump based on the set point oil pressure value and the actual oil pressure value, and
transmitting the control data to the hydraulic oil pressure pump.

The packaging machine may further comprise a hydraulic oil tank, wherein the hydraulic oil pressure pump may be connected to the hydraulic oil tank via a first outlet and the injection moulding station, the injection moulding station may be connected to the hydraulic oil tank via a first inlet, a hydraulic oil circulation pump connected to the hydraulic oil tank via a second outlet and a heat exchanger, and the heat exchanger is connected to the hydraulic oil tank via a second inlet, said method comprising
cooling hydraulic oil in the hydraulic oil tank by feeding the hydraulic oil to the heat exchanger by using the hydraulic oil circulation pump.

An advantage of having two loops as presented above, one for providing the hydraulic oil to the injection moulding station and one for cooling the hydraulic oil by the heat exchanger, in combination with using the shape data as input for determining the setpoint oil pressure value is that a capacity of the heat exchanger may be reduced as an effect of that the hydraulic oil is to a less extent heated due to the improved control. This is in turn provides for that a size of the heat exchanger can be reduced, which in turn can provide for that a foot print of a packaging machine comprising the heat exchanger can be reduced. It is also comes with the effect that a more cost efficient heat exchanger can be used.

A hydraulic oil temperature of the hydraulic oil may be below 60 degrees C.

The hydraulic oil may be void of zinc compounds.

The hydraulic oil tank may be arranged to hold 40-70 liter of hydraulic pressure oil.

The shape data may comprise an amount of plastic material used for producing the package in the injection moulding station.

The shape data may further comprise a bottom format of the package produced by the packaging machine.

The package may be a cross-over package having a top made of plastic material, formed in the injection moulding station, and a body made of a carton-based laminate, wherein the shape data comprises top shape data pertaining to a top shape of the top (108) and bottom format data pertaining to a bottom format of the body.

The packaging line may have a plurality of lines such that packages are produced in parallel, wherein each line has separate movement cylinder and separate injection cylinder. The method may further comprise
obtaining active lines data pertaining to one or more active lines of the plurality of lines,
wherein the step of determining the setpoint oil pressure value may be based on the shape data and the active lines data.

Each line may have individual shape data.

The plurality of lines may have a common hydraulic oil pressure pump and a common hydraulic oil tank.

By having multiple lines, each provided with an injection moulding station, sharing one and the same hydraulic pressure pump and also hydraulic oil tank provides for cost efficiency and possibility to provide more compact packaging machine. By using valves, the hydraulic oil pressure may be controlled for the individual lines.

According to a second aspect it is provided a control circuitry, comprising a processor and a memory, for controlling a hydraulic oil pressure pump for generating a hydraulic pressure in a movement cylinder and/or an injection cylinder of an injection moulding station of a packaging machine, wherein the control circuitry is configured to
obtain shape data pertaining to a shape of a package produced by the packaging machine,
determine a setpoint oil pressure value based on the shape data,
obtain an actual oil pressure value from a pressure sensor,
determine control data pertaining to a speed of the hydraulic oil pressure pump based on the set point oil pressure value and the actual oil pressure value, and
transmit the control data to the hydraulic oil pressure pump.

The same features and advantages as presented above with respect to the first aspect also apply to this second aspect.

According to a third aspect it is provided an arrangement comprising a hydraulic oil pressure pump, an injection moulding station and a control circuitry according to the second aspect.

The arrangement may further comprise a hydraulic oil tank, a heat exchanger and a hydraulic oil circulation pump, wherein the hydraulic oil circulation pump may be arranged to cool the hydraulic oil in the hydraulic oil tank by feeding the hydraulic oil via the heat exchanger.

According to a fourth aspect it is provided a packaging machine comprising the arrangement according to the third aspect.

According to a fifth aspect it is provided a computer program product, loadable in a memory, and comprising instructions suitable for performing by a processor the steps of the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1A is a cross-sectional view of an injection moulding station in a packaging machine before plastic material is fed into a mould cavity.
Fig. 1B is a cross-sectional view similar to the one illustrated in fig. 1A, but after the plastic material is fed into the mould cavity.
Fig. 2 is a flowchart illustrating a general principle for controlling a hydraulic oil pressure pump.
Fig. 3 illustrates an arrangement comprising the hydraulic oil pressure pump, a hydraulic oil tank and a hydraulic oil circulation pump.
Fig. 4 is a flowchart illustrating a method for controlling the hydraulic oil pressure pump for generating a hydraulic pressure in a movement cylinder and/or an injection cylinder.
Fig. 5 generally illustrates a control circuitry for controlling the hydraulic oil pressure pump.

### Detailed Description

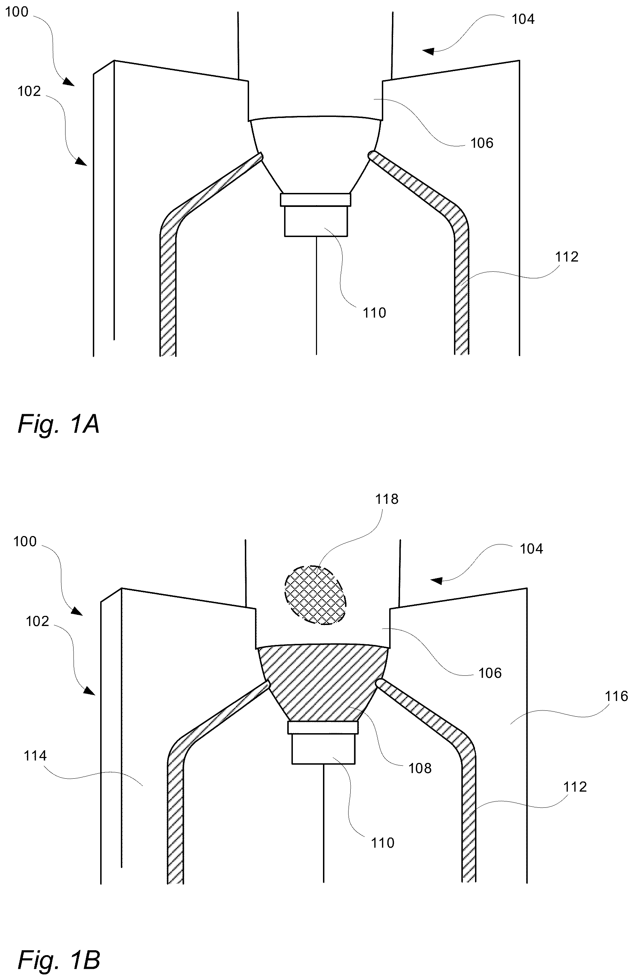

Fig. 1A generally illustrates an injection moulding station 102 of a packaging machine 100. The packaging machine 100 exemplified is arranged to produce packages 104 comprising a body 104 made of a carton-based laminate, a top injection moulded in the injection moulding station 102, and a cap 110, which in this example is pre-applied onto a spout such that the top, when moulded, is attached to the spout and the body 106. Plastic material 112 can, as illustrated, be fed into a mould cavity via two pipes. The example illustrated is only one example of how injection moulding technology can be used in the packaging machine. Another example of a packaging machine using injection moulding technology is Tetra Pak^{®} TT/3 arranged to produce Tetra Top^{®} packages, and marketed by Tetra Pak^{®}.

As illustrated in fig. 1B, during moulding, the plastic material 112 can be fed into the mould cavity via the pipes such that the top 108 is formed. As described above, when forming the top 108, the moulding cavity may be formed such that the body 106 is attached to the top 108, and also that the spout, holding the cap 110, is attached to the top 108. Once the top 108 has been formed, the moulds may be separated and the package 104 may be fed downstream in the packaging machine, e.g. the package may be fed to a filling station in which a food product is filled into the package via an open bottom end.

To control two moulds, a movement cylinder can be used. In the example above illustrated, a female mould is divided in two elements 114, 116 while a male element 118 is made in one piece. In the example illustrated, the male mould 118 is held fixed while the two elements 116, 118 are controlled by the movement cylinder. To feed the plastic material 112 via the pipes an injection cylinder may be used. As will be further explained below, the movement cylinder and the injection cylinder may be controlled hydraulically.

Other examples of injection moulding stations used in the packaging machine 100 may include injection moulding stations configured to mould caps, or opening devices, directly onto the packages, e.g. a web of packaging material to be made into packages.

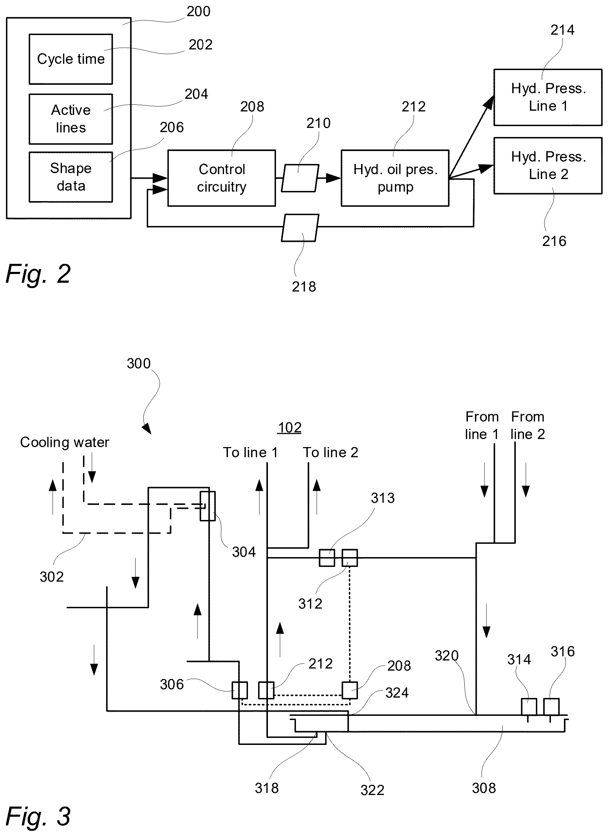

Fig. 2 illustrates a general principle of the approach disclosed herein for controlling a hydraulic oil pressure pump 212. As illustrated, parameters 200 can be provided into a control circuitry 208, sometimes also referred to as regulator algorithm. The parameters 200 can comprise cycle time data 202, that is, a time set aside for handling one package, active lines data 204, that is, information about which of the lines of the packaging machine that are active, and shape data 206, that is, information about a form of the package 104. Regarding the active lines data 204, the packaging machine 100 may be provided with multiple lines such that the capacity of the machine may be increased. In case a minor batch of packages is to be produced, or if one of the injection moulding stations are subject to service, a subset of the lines may be active, that is, producing packages, while others are inactive, that is, not producing packages.

Based on the parameters 200 fed into the control circuitry 208, control data 210 is determined and output from the control circuitry 208. As illustrated, the control data 210 can be transmitted to the hydraulic oil pressure pump 212 such that a speed of this pump can be set, or adjusted, in accordance with the parameters 200, thereby providing for that the movement cylinder and/or the injection cylinder can be controlled in a precise manner. By way of example, in case there are two lines of the packaging machine, a hydraulic pressure to a first line 214 and a hydraulic pressure to a second line 216 can be provided. Further, an actual pressure value 218 may be captured downstream the hydraulic pressure pump 212 and fed back into the control circuitry 208. By doing so, a feedback loop is formed, which provides for improved control of the hydraulic oil pressure pump 212.

The control circuitry 208 may be a stand-alone piece of equipment or it may be integrated as part of another piece of equipment.

Fig. 3 illustrates an arrangement 300 that is using the general principle illustrated in fig. 2. As illustrated, the hydraulic oil pressure pump 212 may be arranged such that hydraulic oil is fed from a hydraulic oil tank 308 to the first and second line of the packaging machine 100. The control circuitry 208 may be communicatively connected to the hydraulic oil pressure pump 212 as well as a pressure sensor 312, as illustrated by the dotted lines. Via the pressure sensor 312, the control circuitry 208 may obtain the actual oil pressure value 218.

In addition, a hydraulic oil valve 313 may act as an overpressure valve. For instance, in case the hydraulic pressure generated by the hydraulic oil pressure pump 212 is 10 bar or above a setpoint oil pressure value, which may be 160 bar, the hydraulic oil can be allowed to pass the valve 313 and return to the hydraulic oil tank 308. Even though exemplified as two different pieces, one and the same piece of equipment may also be used for both capturing actual oil pressure value 218 and acting as the overpressure valve.

More in detail, as illustrated, the hydraulic oil pressure pump 212 can be connected to the hydraulic oil tank 308 via a first outlet 318 and the injection moulding station 102. The injection moulding station 102 may be connected to the hydraulic oil tank 308 via the first inlet 320.

A hydraulic oil circulation pump 306 can also be connected to the hydraulic oil tank 308 via a second outlet 322 and a heat exchanger 304, and the heat exchanger 304 can be connected to the hydraulic oil tank 308 via second inlet 324. The hydraulic oil circulation pump 306 can, unlike the hydraulic oil pressure pump 212, be running at a fixed speed, that is, not speed regulated. Even though the hydraulic oil circulation pump 306 is not speed regulated, this may be communicatively connected to the control circuitry 208, as illustrated, such that e.g. ON/OFF signals may be transmitted from the control circuitry 208 to the hydraulic oil circulation pump 306. As illustrated, cooling water may be fed to the heat exchanger 304 via a cooling water supply pipe 302.

An advantage with having the hydraulic oil pressure pump 212 controlled based on the parameters 200 and also the actual oil pressure value 218 is that a more precise control of the hydraulic pressure provided to the injection moulding stations 102 can be provided. An effect of this improved control is that a likelihood that the hydraulic oil valve 313, or other over-pressure valve, has to be used due to that the hydraulic pressure delivered by the hydraulic oil pressure pump 212 is above a setpoint can be reduced. Since pumping and feeding the hydraulic oil via pumps and valves comes with the effect that the hydraulic oil is heated, the improved control comes with the positive effect that the hydraulic oil is to a less extent heated. This in turn provides for that a need for cooling the hydraulic oil is reduced, which provides for that a capacity of the heat exchanger 304 can be reduced. Less capacity provides for that a size of the heat exchanger 304 can be reduced, in turn providing for that a more compact packaging machine can be achieved.

In addition to reducing the need for cooling the hydraulic oil, another positive effect of reducing the heating of the hydraulic oil is that the seals and other wear parts, such as gaskets and bearings, are less affected, and thus that a lifetime of these may be extended, thereby providing for extended service intervals.

Further, as illustrated, a temperature sensor 314 and a level sensor 316 may provided on the hydraulic oil tank 308 as illustrated. Even though not illustrated, data pertaining to temperature of the hydraulic oil and/or data pertaining to a level in the tank may be communicated to the control circuitry such that this information can be taken into account as well when determining the control data.

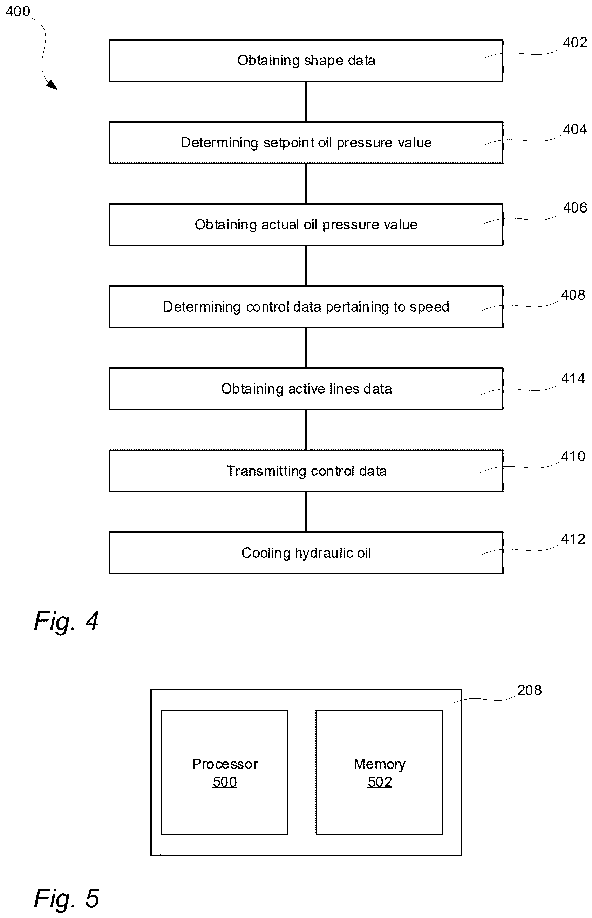

Fig. 4 is a flowchart illustrating a method 400 for controlling the hydraulic oil pressure pump 212 for generating the hydraulic pressure in the movement cylinder or the injection cylinder of the injection moulding station 102 of the packaging machine 100. The method may comprise obtaining 402 the shape data 206 pertaining to a shape of the package 104 produced by the packaging machine 100, determining 404 a setpoint oil pressure value based on the shape data 206, obtaining 406 the actual oil pressure value 218 by using the pressure sensor 312, determining 408 the control data 210 pertaining to the speed of the hydraulic oil pressure pump 212 based on the set point oil pressure value and the actual oil pressure value 218, and transmitting 410 the control data to the hydraulic oil pressure pump 212.

In line with the description above, the hydraulic pressure formed may be used in the movement cylinder only, the injection cylinder only or in both cylinders.

Further, the method 400 may comprise cooling 412 the hydraulic oil in the hydraulic oil tank 308 by feeding the hydraulic oil to the heat exchanger 304 by using the hydraulic oil circulation pump 306.

The packaging line may have a plurality of lines such that packages are produced in parallel. Each line may have a separate movement cylinder and a separate injection cylinder. When the packaging machine is arranged in this way, the method may further comprise obtaining 414 the active lines data 204 pertaining to one or more active lines of the plurality of lines. With this information at hand, the step of determining 404 the setpoint oil pressure value may be based on the shape data 206 and the active lines data 204.

Fig. 5 illustrates the control circuitry 208. As illustrated, the control circuitry 208 may comprise a processor 500 and a memory 502. In combination, the processor and the memory can be configured for performing the method 400 illustrated in fig. 4.

From the description above follows that, although various embodiments of the invention have been described and shown, the invention is not restricted thereto, but may also be embodied in other ways within the scope of the subject-matter defined in the following claims.

## Claims

1. A method (400) for controlling a hydraulic oil pressure pump (212) for generating a hydraulic pressure in a movement cylinder or an injection cylinder of an injection moulding station (102) of a packaging machine (100), said method comprising
obtaining (402) shape data (206) pertaining to a shape of a package (104) produced by the packaging machine (100),
determining (404) a setpoint oil pressure value based on the shape data (206),
obtaining (406) an actual oil pressure value (218) by using a pressure sensor (312),
determining (408) control data (210) pertaining to a speed of the hydraulic oil pressure pump (212) based on the set point oil pressure value and the actual oil pressure value (218), and
transmitting (410) the control data to the hydraulic oil pressure pump (212).

2. The method (400) according to claim 1, wherein the packaging machine (100) further comprises a hydraulic oil tank (308), wherein the hydraulic oil pressure pump (212) is connected to the hydraulic oil tank (308) via a first outlet (318) and the injection moulding station (102), the injection moulding station (102) is connected to the hydraulic oil tank (308) via a first inlet (320), a hydraulic oil circulation pump (306) connected to the hydraulic oil tank (308) via a second outlet (322) and a heat exchanger (304), and the heat exchanger (304) is connected to the hydraulic oil tank (308) via a second inlet (324), said method comprising
cooling (412) hydraulic oil in the hydraulic oil tank (308) by feeding the hydraulic oil to the heat exchanger (304) by using the hydraulic oil circulation pump (306).

3. The method (400) according to claim 2, wherein a hydraulic oil temperature of the hydraulic oil is below 60 degrees C.

4. The method (400) according to any one of the preceding claims, wherein the hydraulic oil is void of zinc compounds.

5. The method (400) according to any one of claims 2 to 4, wherein the hydraulic oil tank (308) is arranged to hold 40-70 liter of hydraulic pressure oil.

6. The method (400) according to any one of the preceding claims, wherein the shape data (206) comprises an amount of plastic material (112) used for producing the package (104) in the injection moulding station (102).

7. The method (400) according to any one of the preceding claims, wherein the shape data (206) further comprises a bottom format of the package (104) produced by the packaging machine (100).

8. The method (400) according to any one of the preceding claims, wherein the package (104) is a cross-over package having a top (108) made of plastic material (112), formed in the injection moulding station (102), and a body (106) made of a carton-based laminate, wherein the shape data (206) comprises top shape data pertaining to a top shape of the top (108) and bottom format data pertaining to a bottom format of the body (106).

9. The method (400) according to any one of the preceding claims, wherein the packaging line has a plurality of lines such that packages are produced in parallel, wherein each line has separate movement cylinder and separate injection cylinder, wherein the method further comprises
obtaining (414) active lines data (204) pertaining to one or more active lines of the plurality of lines,
wherein the step of determining (404) the setpoint oil pressure value is based on the shape data (206) and the active lines data (204).

10. The method (400) according to claim 9, wherein each line has individual shape data (206).

11. The method (400) according to claim 9 or 10, wherein the plurality of lines has a common hydraulic oil pressure pump (212) and a common hydraulic oil tank (308).

12. A control circuitry (208), comprising a processor (500) and a memory (502), for controlling a hydraulic oil pressure pump (212) for generating a hydraulic pressure in a movement cylinder and/or an injection cylinder of an injection moulding station (102) of a packaging machine (100), wherein the control circuitry (208) is configured to
obtain shape data (206) pertaining to a shape of a package (104) produced by the packaging machine (100),
determine a setpoint oil pressure value based on the shape data (206),
obtain an actual oil pressure value (218) from a pressure sensor (312),
determine control data (210) pertaining to a speed of the hydraulic oil pressure pump (212) based on the set point oil pressure value and the actual oil pressure value (218), and
transmit the control data to the hydraulic oil pressure pump (212).

13. An arrangement (300) comprising a hydraulic oil pressure pump (212), an injection moulding station (102) and a control circuitry (208) according to claim 12.

14. The arrangement (300) according to claim 13, further comprising a hydraulic oil tank (308), a heat exchanger (304) and a hydraulic oil circulation pump (306), wherein the hydraulic oil circulation pump (306) is arranged to cool the hydraulic oil in the hydraulic oil tank (308) by feeding the hydraulic oil via the heat exchanger (304).

15. A packaging machine (100) comprising the arrangement (300) according to claim 13 or 14.
